# EUROPEAN PATENT SPECIFICATION

(11) **EP 4 080 485 B1**
(45) Date of publication and mention of the grant of the patent: **02.12.2026**
(21) Application number: 22166293.5
(22) Date of filing: 01.04.2022
(51) Int. Cl.: G08G 5/00

(54) **SYSTEMS AND METHODS FOR DISPLAYING COMBINED RUNWAY OVERRUN AWARENESS ALERTING SYSTEM (ROAAS) AND SURFACE INDICATIONS ALERTS (SURFIA) TRAFFIC SYMBOLOGY**
SYSTEME UND VERFAHREN ZUR ANZEIGE EINES KOMBINIERTEN WARNSYSTEMS FÜR DIE ÜBERROLLUNG VON START- UND LANDEBAHNEN (ROAAS) UND FÜR VERKEHRSSYMBOLE MIT OBERFLÄCHENANZEIGEN (SURFIA)
SYSTÈMES ET PROCÉDÉS D'AFFICHAGE DE SYMBOLOGIE DE TRAFIC COMBINÉE D'UN SYSTÈME D'ALERTE DE DÉPASSEMENT DE PISTE (ROAAS) ET D'ALERTES D'INDICATIONS DE SURFACE (SURFIA)

(30) Priority: 21.04.2021 US 202117236259
(43) Date of publication of application: 26.10.2022
(73) Proprietor: Honeywell International Inc., Charlotte, NC 28202 (US)
(72) Inventor: HE, Gang, Charlotte, 28202 (US); FEYEREISEN, Thea, Charlotte, 28202 (US); QIN, Zhihao, Charlotte, 28202 (US)
(74) Representative: Ingrassia, Fisher & Lorenz UK Ltd.

(56) References cited:
- US-A- 5 724 040
- US-A1- 2008 275 642
- US-A1- 2010 250 034
- US-A1- 2014 249 737
- US-A1- 2014 257 601
- US-A1- 2016 063 869
- US-A1- 2016 083 107
- US-A1- 2018 127 111

## Description

### TECHNICAL FIELD

The following disclosure relates generally to systems and methods that provide landing area information, and, more particularly, to systems and methods for displaying combined runway overrun awareness alerting system (ROAAS) and surface indications alerts (SURFIA) traffic symbology for an aircraft.

### BACKGROUND

A final approach landing operation is a high workload environment in which a pilot must process many pieces of information. During landing operations, the pilot and crew generally rely on an active map display in a cockpit of an aircraft to present some combination of a flight plan, missed approach information, information about surrounding traffic, weather radar data, and the like. The active map display is usually a lateral display (also called a navigation display). Often, for a final approach landing operation, conventional flight guidance systems center the navigation display at the aircraft's current location. As such, the scale and the provided view of the navigation display presents a technical challenge because it is most likely not optimal for flight crews to quickly understand landing performance and runway occupancy conditions, such as potential traffic onto the landing runway.

Accordingly, systems and methods that provide technologically improved landing area information on an active map display in a cockpit of an aircraft are desirable. A relevant example is disclosed in US2014249737A1. Furthermore, other desirable features and characteristics of the present invention will be apparent from the subsequent detailed description and the appended claims, taken in conjunction with the accompanying drawings and the foregoing technical field and background.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

Provided is a system for providing landing area information on an active display on a display device in a cockpit of an aircraft, as set out in appended claim 1.

Also provided is a method for providing landing area information on an avionic display on a display device in a cockpit of an aircraft. The method being defined according to appended claim 7.

### BRIEF DESCRIPTION OF THE DRAWINGS

At least one example of the present invention will hereinafter be described in conjunction with the following figures, wherein like numerals denote like elements, and:
FIG. 1 is a block diagram of a system for providing landing area information on an active map display on a display device in a cockpit of an aircraft, as illustrated in accordance with an exemplary embodiment of the present disclosure;
FIG. 2 is an architectural block diagram of one or more application modules that may be operating in the system shown in FIG. 1, in accordance with an exemplary embodiment of the present disclosure;
FIGS. 3-4 depict embodiments of the graphical insert constructed, in accordance with an exemplary embodiment of the present disclosure;
FIG. 5 depicts an active map display with the graphical insert overlaid on it, in accordance with an exemplary embodiment of the present disclosure; and
FIG. 6 is a flow chart of a method for providing landing area information on an active map display on a display device in a cockpit of an aircraft, as may be implemented by the system of FIG. 1, in accordance with an exemplary embodiment of the present disclosure.

### DETAILED DESCRIPTION

The following Detailed Description is merely exemplary in nature and is not intended to limit the invention or the application and uses of the invention. The term "exemplary," as appearing throughout this document, is synonymous with the term "example" and is utilized repeatedly below to emphasize that the description appearing in the following section merely provides multiple non-limiting examples of the invention and should not be construed to restrict the scope of the invention, as set-out in the Claims, in any respect. As further appearing herein, the term "pilot" encompasses all users of the below-described aircraft system.

As mentioned, during highly cognitively demanding landing operations, the pilot and crew generally rely on an active map display in the cockpit of the aircraft to present some combination of a flight plan, missed approach information, information about surrounding traffic, weather radar data, and the like. In many available flight display systems, during a final approach landing operation, the available landing environment information is an active map display (a navigation display) that is centered at the aircraft's current location, referred to as a landing display. This landing display presents technical challenges because the scale and the provided view of the navigation display are generally not optimal for flight crews to quickly understand landing performance and runway occupancy conditions, such as potential traffic onto the landing runway.

Embodiments described herein present a solution to the technical challenges described above in the form of systems and methods providing landing area information on an active map display (also referred to as "active display" herein) on a display device in a cockpit of an aircraft. The present disclosure provides landing area information in the form of an easily comprehensible graphic insert having combined symbology from the runway overrun awareness alerting system (ROAAS) and surface indications alerts (SURFIA) for traffic.

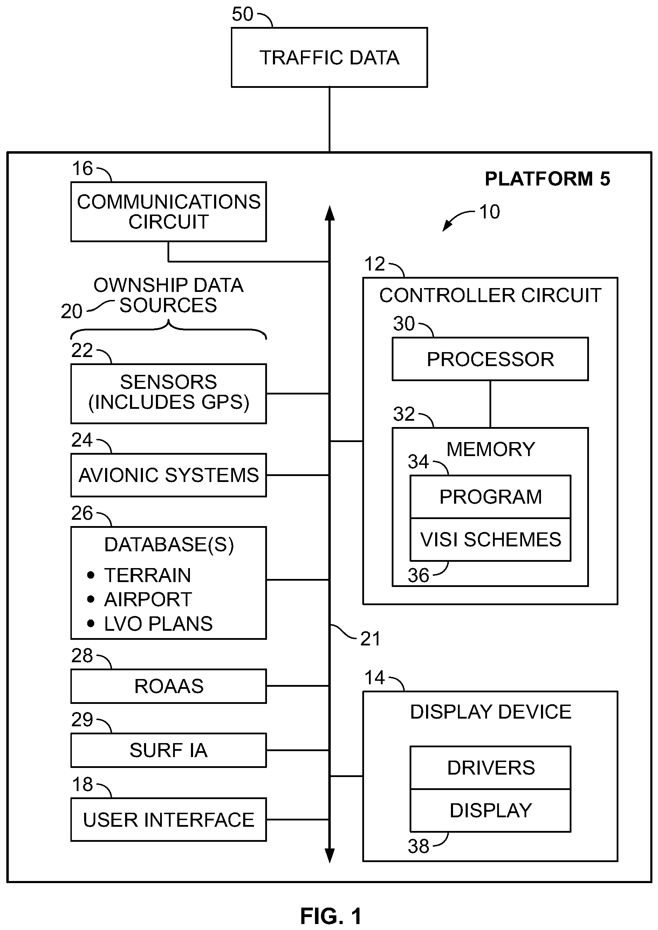

FIG. 1 is a block diagram of a system 10 for providing combined landing area information on an active map display on a display device in a cockpit of an aircraft (shortened herein to "system" **10),** in accordance with an embodiment of the present disclosure. The system **10** may be utilized onboard a mobile platform **5** to provide enhanced landing area information, as described herein. In various embodiments, the mobile platform is an aircraft 5, which carries or is equipped with the system **10.** As schematically depicted in FIG. 1, system **10** includes the following components or subsystems, each of which may assume the form of a single device or multiple interconnected devices: a controller circuit **12** operationally coupled to: at least one display device **14;** a communications circuit **16;** a user interface **18,** and one or more ownship data sources **20.** In various embodiments, the controller circuit **12** communicates with the other components of the system **10** via a communication bus **21.**

The display device **14** can include any number and type of image generating devices on which one or more avionic displays **38** may be produced. The display device **14** may embody a touch screen display. When the system **10** is utilized for a manned Aircraft, display device **14** may be affixed to the static structure of the Aircraft cockpit as, for example, a Head Down Display (HDD) or Head Up Display (HUD) unit. Alternatively, display device **14** may assume the form of a movable display device (e.g., a pilot-worn display device) or a portable display device, such as an Electronic Flight Bag (EFB), a laptop, or a tablet computer carried into the Aircraft cockpit by a pilot.

The communications circuit **16** generally includes an antenna, which may wirelessly transmit data to and receive real-time data and signals from various external sources, including, each of: a source of traffic data **50,** air traffic control (ATC), ILS antennas (glide slope and localizer), ground stations, weather service source, and the like.

The user interface **18** may include any combination of a keyboard, cursor control device, voice input device, gesture input apparatus, or the like. The user interface may include any of: a graphical user interface (GUI), a speech recognition system, and a gesture recognition system.

The ownship data sources **20** generally include an array of flight parameter and geographic positioning system (GPS) sensors **22,** onboard avionic systems **24,** and a database **26.** The ownship data sources may include a flight management system (FMS) **28.** The ownship data sources **20** are further described below.

Flight parameter and GPS sensors **22** supply various types of data or measurements to controller circuit **12** during Aircraft flight. In various embodiments, the sensors **22** supply, without limitation, one or more of: inertial reference system measurements providing a location, Flight Path Angle (FPA) measurements, airspeed data, groundspeed data (including groundspeed direction), vertical speed data, vertical acceleration data, altitude data, attitude data including pitch data and roll measurements, yaw data, heading information, sensed atmospheric conditions data (including wind speed and direction data), flight path data, flight track data, radar altitude data, and geometric altitude data.

Onboard avionic systems **24** provide feedback and control for the engine and flight configuration equipment.

In practice, the database **26** may be realized as one or more different onboard databases, each being a computer-readable storage media or memory. In various embodiments, two- or three-dimensional map data may be stored in a database **26,** including airport features data, geographical (terrain), buildings, bridges, and other structures, street maps, and navigational databases, which may be updated on a periodic or iterative basis to ensure data timeliness. This map data may be uploaded into the database **26** at an initialization step and then periodically updated, as directed by either a program **34** update or by an externally triggered update.

Embodiments described in more detail below refer to a landing location (which, in many cases, is a runway), a landing area environment, and a target exit. As may be appreciated, the landing area environment is an area surrounding the landing location. The landing area environment may include part of an airport with indications of intersecting runways and taxiways to the landing location. In various embodiments, therefore, the database **26** may be a source of the landing location, the landing area environment, and the target exit, described in more detail below.

In some embodiments, the source of any of: the landing location, the landing environment, and the target exit, is user input via the user interface **18.**

In some embodiments, the controller circuit **12** identifies the landing location via shared communications over the communication bus **21,** such as, a flight plan shared by a flight management system (FMS), and then references the airport features data to obtain data (such as dimensions, markings, orientation, etc.) for the identified landing location. In other embodiments, the target exit may be provided via shared communications over the communication bus **21,** such as, a flight plan shared by a flight management system (FMS).

ROAAS **28** is a source of runway overrun awareness alerting system (ROAAS) elements and ROAAS alerts. As used herein, the ROAAS elements include symbology, such as, but not limited to: a donut to show a stopping point for the aircraft as a function of current deceleration, a runway identifier, a distance remaining, and a runway threshold. The ROAAS alerts are types of alerts, and include, for example, green for all stopping points being within safe confinement of a landing runway; cyan/white for some stopping points exceeding the runway length; amber for stopping points not attainable without corrective action; and red for stopping points not attainable and a go-around is required.

SurfIA **29** is a source of surface indication alerts (SurfIA) elements and SurfIA alerts. SurfIA gives pilots information about approaching hazards on a runway. Similar to ROAAS, SurfIA elements are the symbols used on the active map display, and SurfIA alerts are a type of alert with warning levels requiring immediate pilot actions.

The specific elements and alerts of ROAAS and SurfIA are not the subject of the present invention, as they are already known to persons with skill in the art. The provided apparatus and methods build on these systems by constructing a graphical insert for the avionic display **38** that combines ROAAS landing performance data and relevant runway traffic information from SurfIA, beneficially providing an improved human-machine interface, in the form of easily comprehensible landing information (as well as approach and takeoff guidance) that is grounded in a common runway context for rapid situation awareness.

Although schematically illustrated in FIG. 1 as a single unit, the individual elements and components of the system **10** can be implemented in a distributed manner utilizing any practical number of physically distinct and operatively interconnected pieces of hardware or equipment. When the system **10** is utilized as described herein, the various components of the system **10** will typically all be located onboard the Aircraft **5.** In various embodiments, the system **10** may be separate from or integrated within: a flight management system (FMS) and/or a flight control system (FCS).

The term "controller circuit," as appearing herein, broadly encompasses those components utilized to carry-out or otherwise support the processing functionalities of the system **10.** Accordingly, controller circuit **12** can be implemented as a programmable logic array, application specific integrated circuit, system on a chip (SOC), or other similar firmware, as well as by a combination of any number of individual processors, flight control computers, navigational equipment pieces, computer-readable storage devices (including or in addition to memory **32),** power supplies, storage devices, interface cards, and other standardized components.

In various embodiments, as depicted in FIG. 1, the controller circuit **12** embodies an enhanced computer system, having one or more processors **30** operationally coupled to computer-readable storage media or memory **32,** having stored therein at least one novel firmware or software program **34** (generally, computer-readable instructions that embody an algorithm) for carrying-out the various process tasks, calculations, and control/display functions described herein. During operation, the controller circuit **12** may be programmed with and execute the at least one firmware or software program, for example, program **34,** that embodies an algorithm for receiving, processing, calculating, overlaying, and altering renderings, described herein, to thereby perform the various process steps, tasks, calculations, and control/display functions described herein.

Controller circuit **12** may exchange data, including real-time wireless data, with one or more external sources, such as the source of traffic data **50** to support operation of the system **10** in embodiments. In this case, the controller circuit **12** may utilize the communications circuit **16** to manage bidirectional wireless data exchange over a communications network, such as a public or private network implemented in accordance with Transmission Control Protocol/Internet Protocol architectures or other conventional protocol standards. Encryption and mutual authentication techniques may be applied, as appropriate, to ensure data security. In various embodiments, the communications circuit **16** is integrated within the controller circuit **12.**

In some embodiments, the source of traffic data **50** is an automatic-dependent surveillance broadcast (ADS-B) system. In some embodiments, the source of traffic data **50** is a ground-based traffic broadcasting system. In yet other embodiments, the source of traffic data is an automatic-dependent surveillance broadcast (ADS-B) system and a ground-based traffic broadcasting system.

Memory **32** is a data storage that can encompass any number and type of storage media suitable for storing computer-readable code or instructions, such as the aforementioned software program **34,** as well as other data generally supporting the operation of the system **10.** Memory **32** may also store and be the source of one or more preprogrammed visualization schemes **36,** for use by the algorithm embodied in software program **34.** The visualization schemes **36** include rules for presenting surface indication alerts (SurfIA) elements and SurfIA alerts, and for presenting runway overrun awareness alerting system (ROAAS) elements and ROAAS alerts, as described above.

Specific to these embodiments, the program **34** plus visualization schemes **36** include rules for constructing a graphical insert that depicts the landing area environment as a two-dimensional area that includes the landing location rendered therein in a first visualization scheme; rules for altering the rendering of the landing location to a second visualization scheme, responsive to a ROAAS alert, the second visualization scheme being visually distinguishable from the first visualization scheme, and rendering respective ROAAS elements on the landing location within the landing area environment; and, rules for, responsive to a SurfIA alert, indicating traffic symbols in a third visualization scheme associated with a traffic in the SurfIA alert on the landing area environment. In summary, the program **34** plus visualization schemes **36** provide rules for combining ROAAS and SurfIA elements and alerts into this graphical insert, and rules to indicate, in this graphical insert, priorities among the combined ROAAS and SurfIA alerts.

The visualization schemes include symbology and methods for distinguishing features, such as, using a highlight color, a highlight box, a jagged boundary, or a bright color that is not otherwise used by existing elements in the active map display. In cases in which black and white displays or mono color are relied upon, the visually distinguishing techniques may include changing line thicknesses and/or using dashed/dotted lines. It is noted that 2D landing environment area for placing the combined symbology elements is a preferred way, a 3D orthographic or perspective representation may also be used.

In certain embodiments of system **10,** the controller circuit **12** and the other components of the system **10** may be integrated within or cooperate with any number and type of systems commonly deployed onboard an aircraft including, for example, an FMS, an Attitude Heading Reference System (AHRS), an Instrument Landing System (ILS), and/or an Inertial Reference System (IRS).

With continued reference to FIG. 1, the display device **14** includes the necessary display drivers to generate at least one avionic display **38** during operation of the system **10;** the term "avionic display" defined as synonymous with the term "aircraft-related display" and "cockpit display" and encompasses displays generated in textual, graphical, cartographical, and other formats. In various embodiments, the avionic display **38** is a primary flight display (PFD) or a navigation display. In various embodiments, the avionic display **38** can be, or include, any of various types of lateral displays and vertical situation displays on which map views and symbology, text annunciations, and other graphics pertaining to flight planning are presented for a pilot to view. The avionic display **38** generated and controlled by the system **10** can include graphical user interface (GUI) objects and alphanumerical input displays of the type commonly presented on the screens of MCDUs, as well as Control Display Units (CDUs) generally. Specifically, embodiments of avionic displays **38** include one or more two dimensional (2D) avionic displays, such as a horizontal (i.e., lateral) navigation display or vertical navigation display; and/or on one or more three dimensional (3D) avionic displays, such as a Primary Flight Display (PFD) or an exocentric 3D avionic display. With respect to the present disclosure, the avionic display includes an active map display with at least a continuously updated navigation display **38** showing the aircraft **5** at its current location and trajectory within the relevant map data, e.g., a landing environment or an airport moving map (AMM).

In various embodiments, a human-machine interface, such as the above described touch screen display, is implemented as an integration of the user interface **18** and a display device **14.** Via various display and graphics systems processes, the controller circuit **12** may command and control the touch screen display generating a variety of graphical user interface (GUI) objects or elements described herein, including, for example, buttons, sliders, and the like, which are used to prompt a user to interact with the human-machine interface to provide user input, and to activate respective functions and provide user feedback, responsive to received user input at the GUI element.

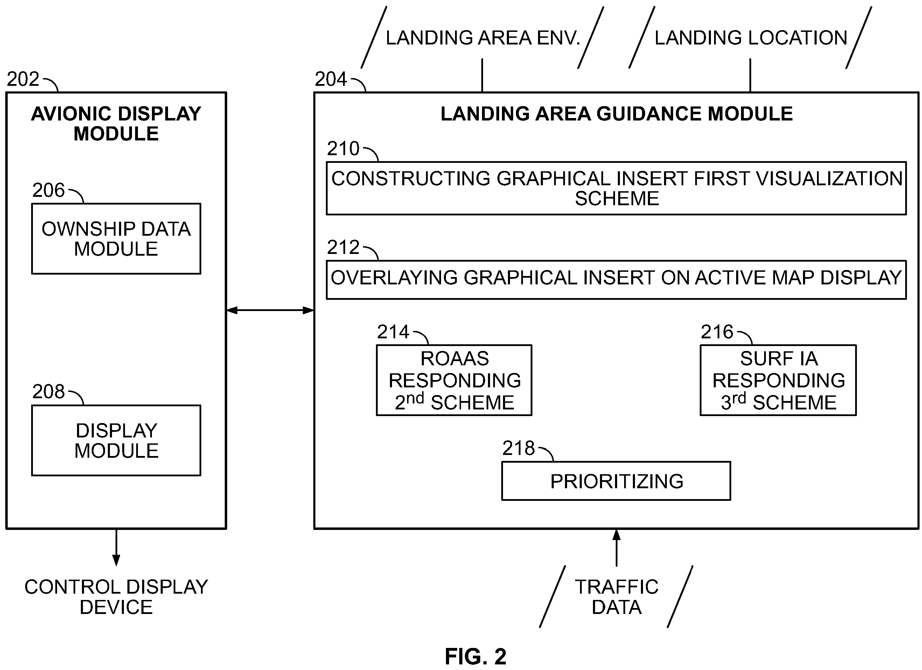

Turning now to FIGS. 2-5, and with continued reference to FIG. 1, construction and presentation of the graphical insert is further described. FIG. 2 provides an architectural block diagram of one or more application modules that may be operating in the system **10.** In various embodiments, the applications modules may be embodied as blocks of hardware or software programming instructions, such as program **34.** In various embodiments, the system **10** may include an avionic display module **202** and a landing area guidance module **204,** that are configured to process the display of an active map display (the avionic display **38)** on the display device **14,** construction of the graphical insert, overlaying the graphical insert on the active map display, and responding to ROAAS and SurfIA alerts by altering the rendering of the graphical insert as described herein. In other embodiments, one or more modules may operate on separate computing devices. For example, in various embodiments, the avionic display module **202** may be configured to operate on an aircraft **5,** and the landing area guidance module **204** may be configured to operate on a mobile device.

In various embodiments, the avionic display module **202** is configured with an ownship data module **206** for receiving or actively acquiring ownship data from the various ownship data sources **20.** The avionic display module **202** may also have a display module **208** that is configured to drive the display device **14** to render the avionic display(s) **38** as described, in particular, the active map display, based at least in part on the data from the ownship data sources **20,** such as aircraft status data. In various embodiments, the avionic display module **202** is configured to respond to commands from the landing area guidance module **204** to alter the active map display.

Within the landing area guidance module **204,** a graphical insert constructor module **210** may be configured to construct the graphical insert (graphical insert **300, 400,** and **700)** that places the landing location within features that surround it (e.g., with reference to an airport features database **26);** this graphical insert depicts the landing area environment as a two-dimensional area that includes the landing location and cause the rendering of the landing location within the landing area environment, using a first visualization scheme. In various embodiments, graphical insert constructor module **210** further processes received traffic data to determine if a neighbor traffic may be traveling on an intersecting runway or taxiway at a relevant time to the aircraft's travel path; accordingly, the graphical insert constructor module **210** determines whether or not to render an intersecting taxiway or runway on the graphical insert, as a function of the traffic data (i.e., as a function of determining that the a neighbor traffic may be traveling on an intersecting runway or taxiway at a relevant time to the aircraft's travel path). In various embodiments, that determination is made by determining that the traffic data indicates a threat to the aircraft caused by a traffic that will be using the intersecting taxiway or runway, and the threat exceeds a preprogrammed threat level. A threat level is generally measured by separation in time or space between the aircraft and the traffic.

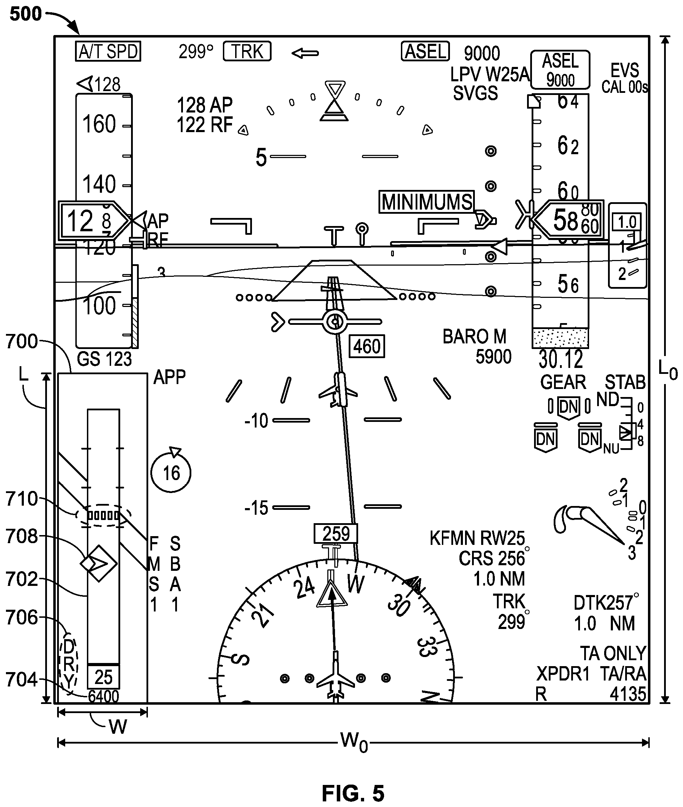

Once constructed, an overlaying module **212** may coordinate overlaying the graphical insert on the active map display. In an embodiment, the overlaying module **212** do this by identifying dimensions of an area of the active map display; e.g., an original width (FIG. 5, Wo) and an original height (FIG. 5, Lo), and then scaling the width and scaling the height by a percentage to arrive at an appropriate "smaller size" for the area of the graphical insert, the smaller size is a predefined portion of the area of the active map display. In various embodiments, the predefined portion means a width of the graphical insert is approximately 20% of Wo and the height of the graphical insert is approximately 50% of the height. Once the dimensions (FIG. 5, L, W) of the graphical insert are determined, the overlaying module **212** may further align the graphical insert. In an embodiment, the overlaying module **212** aligns a bottom-left corner of the graphical insert with a bottom left corner of the active map display (as shown in FIG. 5, **500).** In various embodiments, the first visualization scheme includes depicting the landing location as a rectangle of a first color, with a border of a contrasting color from the first color.

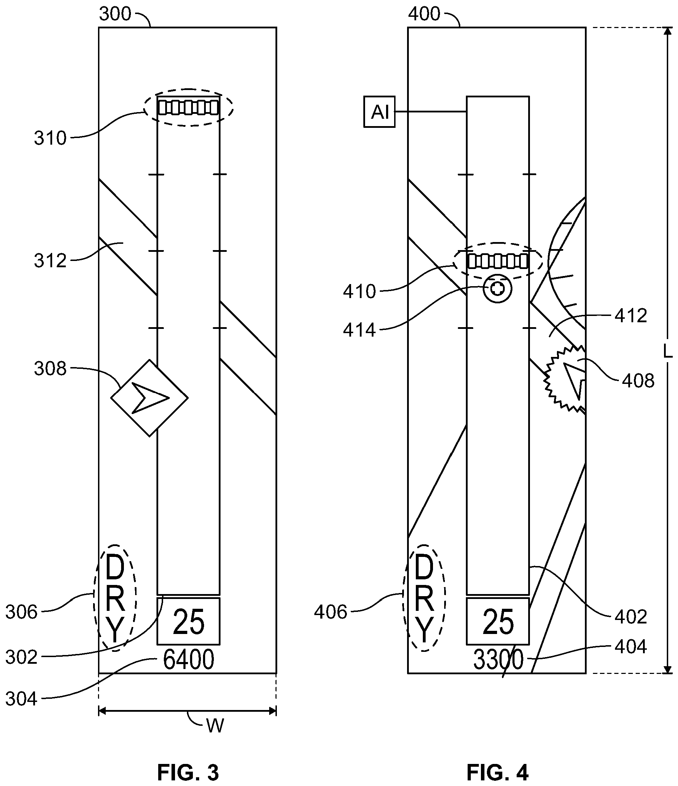

With reference to FIGS. 3-5, and with continued reference to FIG. 2, the graphical insert **300** and graphical insert **400** are described (each having dimensions L, W, as described). Runway **302** is rendered, centered within the dimensions L, W. The area around the runway **302,** and the runway **302** itself, is the landing area environment. The runway identification **25** is indicated. The runway is indicated as dry at 306.

ROAAS elements are indicated, including the distance remaining 6400 feet **(304),** and the runway Landing threshold **310.** SurfIA elements are indicated, including a traffic **308,** crossing the runway **302** from left to right. An intersecting runway **312** is indicated. As mentioned, in some embodiments, the controller circuit **12** may omit rendering the intersecting runway **312** in the graphical insert **300** when there isn't a traffic using it at a relevant time.

A ROAAS responding module **214** may be configured to, responsive to a ROAAS alert, (i) alter the rendering of the landing location to a second visualization scheme that is visually distinguishable from the first visualization scheme, and (ii) render respective ROAAS elements on the landing location within the landing area environment. The ROAAS responding module **214** may include the ROAAS visualization scheme rules. FIG. 4 depicts an example of the controller circuit **12** employing ROAAS visualization scheme rules. Responsive to the ROAAS alert, the controller circuit **12** may alter the rendering of the landing location e.g., by altering a border of the landing location (runway **302)** to a different color than it was in the first visualization scheme, e.g., to flash red, and may further alter the rendering of the landing location by flashing the identifier of the runway **302,** e.g., flashing it in red. Responsive to a ROAAS alert, a ROAAS elements are also rendered in the landing area environment, for example, the current stopping location is indicated with a donut symbol **414,** and the runway **402** is indicated to be at 3300 feet **(404)** remaining distance from the aircraft. The conditions at the runway **402** are dry **406.** FIG. 4 additionally depicts a target exit from the landing location, A1, as identified by the controller circuit **12.**

A SurfIA responding module **216** may be configured to, responsive to a SurfIA alert, indicate a traffic in the landing area environment that is associated with the SurfIA alert with a third visualization scheme associated with SurfIA system (e.g., the symbology for traffic). The SurfIA responding module **216** may include the SurfIA visualization scheme rules. In an example of employing the SurfIA visualization scheme rules, responsive to a SurfIA warning alert, the controller circuit **12** may render the respective traffic symbol within the window and enclose it within a shape, such as a square, that is rendered in a highlighted color representing a warning level of the SurfIA alert. As shown in FIG. 4, traffic **408** is identified as being on intersecting runway **412** (i.e., as shown runway **412** intersects with runway **402** just below runway threshold **410),** and the symbol for traffic **408** is rendered with a jagged (or, alternatively, a dashed) boundary to indicate that it is off the scale of the landing environment depicted in the graphical insert.

According to the invention, wherein ROAAS alerts and SurfIA alerts are collectively called alerts, the prioritization module **218** is configured to determine whether multiple alerts are occurring; and, when multiple alerts are occurring, assign a priority to each alert of the multiple alerts by comparing a respective safety level/alert ranking of each alert, and rendering one or more of multiple alerts in the landing area environment in accordance with an assigned priority. Further according to the invention, the prioritization module is configured to normalize a ROASS priority scheme with a SurfIA priority scheme into a normalized priority scale. For example , the prioritization module **218** may first normalize a ROAAS priority scheme (e.g., green, cyan/white, amber, red) with a SurfIA priority scheme (e.g., traffic rendered cyan or white for low priority, traffic rendered yellow for a 30 second warning, and traffic rendered red for a 15 second warning) so that they are on a single normalized priority scale. After the normalized priority scale is determined, a priority of each incoming alert of the multiple alerts is assigned based on the normalized priority scale. The prioritization module **218** further filters the alerts by their assigned priorities, in accordance with a preprogrammed threshold, to identify one or more of the multiple alerts to render on the graphical insert. In an example, a SurfIA warning alert (yellow) may be a higher priority than a ROAAS caution (amber).

In various embodiments, alerts from ROAAS and/or SurfIA are indicated even if not within the landing area environment of the graphical insert. For example, when a distance remaining to land indication is beyond the display provided in the graphical insert, the controller circuit **12** may indicate it as a caged or ghosted symbol. In another embodiment, if a traffic is coming onto an intersecting runway from outside of the landing area environment provided by the graphical insert, the controller circuit **12** may indicate its position, orientation, and a threat level within the graphical insert by displaying the SurfIA traffic symbol using the jagged or dashed symbology described above. In an embodiment, the threat level equates with a high assigned priority on the normalized priority scale.

In FIG. 5, primary flight display **500** is generally centered on the aircraft **5.** Graphical insert **700,** constructed by the controller circuit **12,** is overlaid in the bottom left of the active map display **500.** Runway **702** is indicated at 6400 feet remaining distance **(704);** the runway is indicated as dry at 706. ROAAS landing threshold **710** is indicated. SurfIA traffic is indicated at 708, crossing the runway **702** from left to right. An intersecting runway **712** is indicated. As mentioned, in some embodiments, intersecting runway **712** would be omitted from the graphical insert **700** because there isn't a neighbor traffic using it at a relevant time.

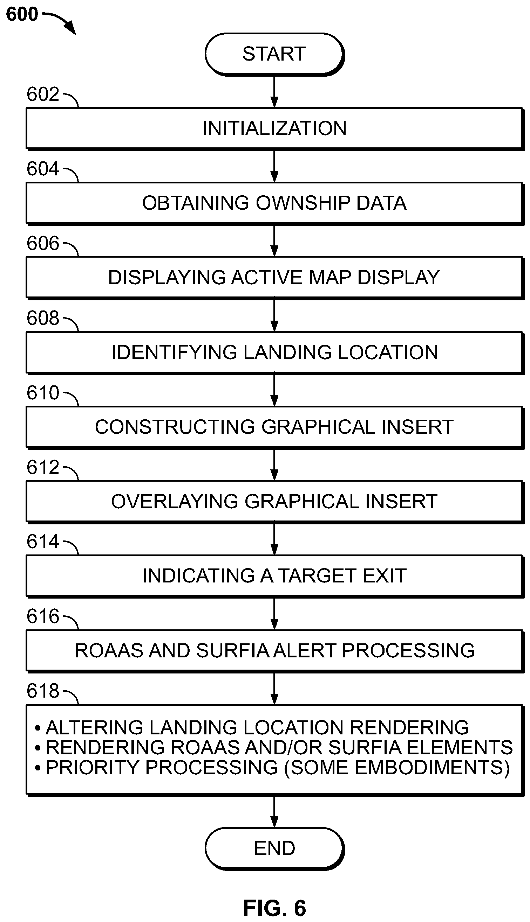

Turning now to FIG. 6, the system **10** described above may be implemented by a processor-executable method **600** providing landing guidance for an aircraft. For illustrative purposes, the following description of method **600** may refer to elements mentioned above in connection with FIG. 1. In practice, portions of method **600** may be performed by different components of the described system. It should be appreciated that method **600** may include any number of additional or alternative tasks, the tasks shown in FIG. 6 need not be performed in the illustrated order, and method **600** may be incorporated into a more comprehensive procedure or method having additional functionality not described in detail herein. Moreover, one or more of the tasks shown in FIG. 6 could be omitted from an embodiment of the method **600** as long as the intended overall functionality remains intact.

At **602,** the system **10** is initialized. Initialization may include loading instructions and program **34** into a processor **30** within the controller circuit **12,** as well as loading at least one visualization scheme **36.** In various embodiments, the system **10** is already initialized and the method proceeds directly to **604.** At **604,** the system **10** is obtaining ownship data and at **606,** the system **10** is displaying the active map display **38** showing the aircraft **5** at its current location and with its current trajectory. At **606,** the system **10** may be receiving traffic data **50** also.

At **608,** the system **10** identifies the landing location. As mentioned above, this may be via input over the communication bus, such as provided by an FMS, or it may be input from a user via the user interface **18.** At **610,** the graphical insert is constructed. Constructing the graphical insert includes determining the L, W dimensions for the graphical insert, as well as rendering the landing location inside it. At **612,** the system overlays the graphical insert on the active map display. At **614,** the system indicates a target exit on the landing location. At **616,** any ROAAS and SurfIA alerts are received and processed. Therefore, at 616, the method is determining whether a runway overrun awareness alerting system (ROAAS) alert has been received; and is determining whether a surface indication alerts (SurfIA) alert has been received. Accordingly, at **616,** received traffic data **50** is processed. At **618,** responsive to a ROAAS alert, the landing location rendering is altered and ROAAS elements are displayed. At **618,** responsive to a SurfIA alert, indicating a traffic associated with the SurfIA alert using SurfIA visualization rules. At **618,** in embodiments that have priority processing of multiple alerts (described above), the priority processing is performed, and the landing environment is altered in accordance with the priority processing. After **618,** the method **600** may end or return to **616.**

Thus, enhanced aircraft guidance systems and methods providing landing area information on an active map display on a display device in a cockpit of an aircraft are provided. The provided methods and systems provide an objectively improved human-machine interface with an easily comprehensible graphical insert overlaid on the active map display. The provided enhanced features provide a user with increased confidence about the surroundings during landing operations.

Although an exemplary embodiment of the present disclosure has been described above in the context of a fully-functioning computer system (e.g., system **10** described above in conjunction with FIG. 1), those skilled in the art will recognize that the mechanisms of the present disclosure are capable of being distributed as a program product (e.g., an Internet-disseminated program or software application) and, further, that the present teachings apply to the program product regardless of the particular type of computer-readable media (e.g., hard drive, memory card, optical disc, etc.) employed to carry-out its distribution.

Terms such as "comprise," "include," "have," and variations thereof are utilized herein to denote non-exclusive inclusions. Such terms may thus be utilized in describing processes, articles, apparatuses, and the like that include one or more named steps or elements but may further include additional unnamed steps or elements. While at least one exemplary embodiment has been presented in the foregoing Detailed Description, it should be appreciated that a vast number of variations exist. Rather, the foregoing Detailed Description will provide those skilled in the art with a convenient road map for implementing an exemplary embodiment of the invention. Various changes may be made in the function and arrangement of elements described in an exemplary embodiment without departing from the scope of the invention as set-forth in the appended Claims.

## Claims

1. A system for providing landing area information on an active display on a display device in a cockpit of an aircraft, the system comprising:
a source (26) of a landing area environment;
a source (28) of runway overrun awareness alerting system (ROAAS) elements and ROAAS alerts;
a source (29) of surface indication alerts (SurfIA) elements and SurfIA alerts;
a source (50) of traffic data; and
a controller circuit (12) configured to receive the ROAAS elements and alerts, the SurfIA elements and alerts, the landing area environment, and the traffic data, the controller circuit configured by programming instructions to:
identify (608) a landing location;
construct (610) a graphical insert that depicts the landing area environment as a two-dimensional area that includes the landing location rendered therein in a first visualization scheme;
overlay (612) the graphical insert on a predefined portion of the active display;
indicate (614) a target exit on the landing location;
responsive to a ROAAS alert, (i) alter the rendering of the landing location to a second visualization scheme that is visually distinguishable from the first visualization scheme, and (ii) render respective ROAAS elements on the landing location within the landing area environment; and
responsive to a SurfIA alert, indicate traffic symbols in a third visualization scheme associated with a traffic in the SurfIA alert on the landing area environment, wherein ROAAS alerts and SurfIA alerts are collectively called alerts, and the controller circuit is further configured to:
determine whether multiple alerts are occurring; and
when multiple alerts are occurring, normalize a ROASS priority scheme with a SurfIA priority scheme into a normalized priority scale, assign a priority to each alert of the multiple alerts by comparing a respective alert ranking of each alert based on the normalized priority scale, filter the multiple alerts according to their assigned priorities in accordance with a preprogrammed threshold in order to identify one or more of the multiple alerts to render on the graphical insert and apply a visualization scheme that renders the one or more of multiple alerts in the landing area environment in accordance with their priority.

2. The system of claim 1, wherein the landing area environment is part of an airport, the landing location is a runway, and wherein the controller circuit is further configured to flash a runway identifier responsive to a ROAAS alert.

3. The system of claim 1, wherein the first visualization scheme includes rendering a border in a first color and rendering a fill in a second color that is visually distinguishable from the first color, and wherein the second visualization scheme includes rendering the border in a third color.

4. The system of claim 1, wherein the landing area environment includes indications of intersecting runways and taxiways to the landing location.

5. The system of claim 1, wherein the source of traffic data is an automatic-dependent surveillance broadcast (ADS-B) system.

6. The system of claim 1, wherein the target exit on a landing location is identified via a user input received from a user interface.

7. A method for providing landing area information on an avionic display on a display device in a cockpit of an aircraft, the method comprising:
at a controller circuit,
receiving (604) ownship data;
displaying (606) an avionic display on a display device;
identifying (608) a landing location;
constructing (610) a graphical insert that depicts a landing area environment as a two-dimensional area that includes the landing location rendered therein in a first visualization scheme;
overlaying (612) the graphical insert on the avionic display;
indicating (614) a target exit on the landing location;
determining whether a runway overrun awareness alerting system (ROAAS) alert has been received;
determining whether a surface indication alerts (SurfIA) alert has been received;
responsive to the ROAAS alert, altering the rendering of the landing location and displaying ROAAS elements; and
responsive to the SurfIA alert, indicating a traffic associated with the SurfIA alert using SurfIA visualization rules wherein ROAAS alerts and SurfIA alerts are collectively called alerts, and further comprising, at the controller circuit:
determining whether multiple alerts are occurring; and
when multiple alerts are occurring, normalizing a ROAAS priority scheme with a SurfIA priority scheme into a normalized priority scale; assigning a priority to each alert of the multiple alerts based on the normalized priority scale; filtering the multiple alerts according to their assigned priorities in accordance with a preprogrammed threshold in order to identify one or more of the multiple alerts to render on the graphical insert; and
rendering the one or more of multiple alerts in the landing area environment in accordance with the assigned priority.

8. The method of claim 7, wherein the landing area environment is part of an airport, and the landing location is a runway.

9. The method of claim 8, further comprising rendering the runway with a red border and flashing a runway identifier responsive to the ROAAS alert.

10. The method of claim 7, further comprising:
determining that a traffic currently outside of the landing area environment is coming onto an intersecting runway; and
indicating its position, orientation, and a threat level within the graphical insert by displaying a SurfIA traffic symbol within a jagged boundary.

11. The method of claim 10, further comprising, receiving traffic data from an automatic-dependent surveillance broadcast (ADS-B) system.

12. The method of claim 10, further comprising, receiving traffic data from a ground-based traffic broadcasting system.

## Patentansprüche

1. System zum Bereitstellen von Landebereichsinformationen auf einer aktiven Anzeige auf einer Anzeigevorrichtung in einem Cockpit eines Flugzeugs, das System umfassend:
eine Quelle (26) einer Landebereichsumgebung;
eine Quelle (28) von Landebahn-Überschießen-Sensibilisierung-Alarmsystem(ROAAS)-Elementen und ROAAS-Alarmen;
eine Quelle (29) von Oberflächenangabealarmen(SurfIA)-Elementen und SurfIA-Alarmen;
eine Quelle (50) von Verkehrsdaten; und
eine Steuerschaltung (12), die dazu konfiguriert ist, die ROAAS-Elemente und -Alarme, die SurfIA-Elemente und -Alarme, die Landebereichsumgebung und die Verkehrsdaten zu empfangen, wobei die Steuerschaltung durch Programmieren von Anweisungen dazu konfiguriert ist:
einen Landeort zu identifizieren (608);
eine Bauchbinde zu erstellen (610), die die Landebereichsumgebung als einen zweidimensionalen Bereich abbildet, der den Landeort beinhaltet, der darin in einem ersten Visualisierungsschema wiedergegeben ist;
die Bauchbinde auf einem vordefinierten Abschnitt der aktiven Anzeige einzublenden (612);
eine Zielausfahrt auf dem Landeort anzugeben (614);
als Antwort auf einen ROAAS-Alarm, (i) das Wiedergeben des Landeorts in ein zweites Visualisierungsschema zu ändern, das visuell von dem ersten Visualisierungsschema unterschieden werden kann, und (ii) jeweilige ROAAS-Elemente auf dem Landeort innerhalb der Landebereichsumgebung wiederzugeben; und
als Antwort auf einen SurfIA-Alarm, Verkehrssymbole in einem dritten Visualisierungsschema, das einem Verkehr in dem SurfIA-Alarm zugehörig ist, auf der Landebereichsumgebung anzugeben, wobei ROAAS-Alarme und SurfIA-Alarme gemeinsam als Alarme bezeichnet werden, und die Steuerschaltung ferner dazu konfiguriert ist:
zu bestimmen, ob multiple Alarme auftreten; und
wenn multiple Alarme auftreten, ein ROASS-Prioritätsschema mit einem SurfIA-Prioritätsschema zu einer vereinheitlichten Prioritätsskala zu vereinheitlichen, durch Vergleichen einer jeweiligen Alarmklassifizierung jedes Alarms basierend auf der vereinheitlichten Prioritätsskala jedem Alarm der multiplen Alarme eine Priorität zuzuweisen, die multiplen Alarme gemäß ihrer zugewiesenen Priorität in Übereinstimmung mit einem vorprogrammierten Schwellenwert zu filtern, um einen oder mehrere der multiplen Alarme zu identifizieren, um sie auf der Bauchbinde wiederzugeben und ein Visualisierungsschema anzuwenden, das den einen oder die mehreren multiplen Alarme in der Landebereichsumgebung in Übereinstimmung mit ihrer Priorität wiedergibt.

2. System nach Anspruch 1, wobei die Landebereichsumgebung Teil eines Flughafens ist, der Landeort eine Landebahn ist und wobei die Steuerschaltung ferner dazu konfiguriert ist, als Antwort auf einen ROAAS-Alarm eine Landebahnkennung aufleuchten zu lassen.

3. System nach Anspruch 1, wobei das erste Visualisierungsschema das Wiedergeben eines Rands in einer ersten Farbe und das Wiedergeben einer Füllung in einer zweiten Farbe, die visuell von der ersten Farbe unterschieden werden kann, beinhaltet, und wobei das zweite Visualisierungsschema das Wiedergeben des Rands in einer dritten Farbe beinhaltet.

4. System nach Anspruch 1, wobei die Landebereichsumgebung Angaben von sich schneidenden, zu dem Landeort führenden Landebahnen und Rollbahnen beinhaltet.

5. System nach Anspruch 1, wobei die Quelle von Verkehrsdaten ein Automatic-Dependent-Surveillance-Broadcast(ADS-B)-System ist.

6. System nach Anspruch 1, wobei die Zielausfahrt auf einem Landeort über eine Benutzereingabe, die von einer Benutzerschnittstelle empfangen wird, identifiziert wird.

7. Verfahren zum Bereitstellen von Landebereichsinformationen auf einer Avionikanzeige auf einer Anzeigevorrichtung in einem Cockpit eines Flugzeugs, das Verfahren umfassend:
an einer Steuerschaltung,
Empfangen (604) von Daten des eigenen Flugzeugs;
Anzeigen (606) einer Avionikanzeige auf einer Anzeigevorrichtung;
Identifizieren (608) eines Landeorts;
Erstellen (610) einer Bauchbinde, die eine Landebereichsumgebung als einen zweidimensionalen Bereich abbildet, der den Landeort beinhaltet, der darin in einem ersten Visualisierungsschema wiedergegeben ist;
Einblenden (612) der Bauchbinde auf der Avionikanzeige;
Angeben (614) einer Zielausfahrt auf dem Landeort;
Bestimmen, ob ein Landebahn-Überschießen-Sensibilisierung-Alarmsystem(ROAAS)-Alarm empfangen wurde;
Bestimmen, ob ein Oberflächenangabealarme(SurfIA)-Alarm empfangen wurde;
als Antwort auf den ROAAS-Alarm, Ändern des Wiedergebens des Landeorts und Anzeigen von ROAAS-Elementen; und
als Antwort auf den SurfIA-Alarm, Angeben eines Verkehrs, der dem SurfIA-Alarm zugehörig ist, unter Verwendung von SurfIA-Visualisierungsregeln, wobei ROAAS-Alarme und SurfIA-Alarme gemeinsam als Alarme bezeichnet werden, und ferner umfassend, an der Steuerschaltung:
Bestimmen, ob multiple Alarme auftreten; und
wenn multiple Alarme auftreten, Vereinheitlichen eines ROAAS-Prioritätsschemas mit einem SurfIA-Prioritätsschema zu einer vereinheitlichten Prioritätsskala; Zuweisen, basierend auf der vereinheitlichten Prioritätsskala; einer Priorität zu jedem Alarm der multiplen Alarme, Filtern der multiplen Alarme gemäß ihrer zugewiesenen Priorität in Übereinstimmung mit einem vorprogrammierten Schwellenwert, um einen oder mehrere der multiplen Alarme zu identifizieren, um sie auf der Bauchbinde wiederzugeben; und
Wiedergeben des einen oder der mehreren multiplen Alarme in der Landebereichsumgebung in Übereinstimmung mit der zugewiesenen Priorität.

8. Verfahren nach Anspruch 7, wobei die Landebereichsumgebung Teil eines Flughafens ist und der Landeort eine Landebahn ist.

9. Verfahren nach Anspruch 8, ferner umfassend das Wiedergeben der Landebahn mit einem roten Rand und das Aufleuchtenlassen einer Landebahnkennung als Antwort auf den ROAAS-Alarm.

10. Verfahren nach Anspruch 7, ferner umfassend:
Bestimmen, dass ein Verkehr, der aktuell außerhalb der Landebereichsumgebung ist, auf eine sich schneidende Landebahn kommt; und
Angeben von dessen Position, Ausrichtung und eines Bedrohungsgrads innerhalb der Bauchbinde, durch Anzeigen eines SurfIA-Verkehrssymbols innerhalb einer gezackten Grenze.

11. Verfahren nach Anspruch 10, ferner umfassend Empfangen von Verkehrsdaten von einem Automatic-Dependent-Surveillance-Broadcast(ADS-B)-System.

12. Verfahren nach Anspruch 10, ferner umfassend Empfangen von Verkehrsdaten von einem bodenbasierten Verkehrsfunksystem.

## Revendications

1. Système pour fournir des informations de zone d'atterrissage sur un affichage actif sur un dispositif d'affichage dans un cockpit d'un aéronef, le système comprenant :
une source (26) d'un environnement de zone d'atterrissage ;
une source (28) d'éléments de système d'alerte de sensibilisation au dépassement de piste (ROAAS) et d'alertes ROAAS ;
une source (29) d'éléments d'alertes d'indication de surface (SurfIA) et d'alertes SurfIA ;
une source (50) de données de trafic ; et
un circuit de contrôle (12) configuré pour recevoir les éléments et alertes ROAAS, les éléments et alertes SurfIA, l'environnement de zone d'atterrissage, et les données de trafic, le circuit de contrôle étant configuré par des instructions de programmation pour :
identifier (608) un emplacement d'atterrissage ;
construire (610) un insert graphique qui illustre l'environnement de zone d'atterrissage en tant que zone bidimensionnelle qui inclut l'emplacement d'atterrissage restitué dans celle-ci dans un premier schéma de visualisation ;
superposer (612) l'insert graphique sur une partie prédéfinie de l'affichage actif ;
indiquer (614) une sortie cible sur l'emplacement d'atterrissage ;
en réponse à une alerte ROAAS, (i) modifier la restitution de l'emplacement d'atterrissage en un deuxième schéma de visualisation qui peut être distingué visuellement du premier schéma de visualisation, et (ii) restituer des éléments ROAAS respectifs sur l'emplacement d'atterrissage dans l'environnement de zone d'atterrissage ; et
en réponse à une alerte SurfIA, indiquer des symboles de trafic dans un troisième schéma de visualisation associé à un trafic dans l'alerte SurfIA sur l'environnement de zone d'atterrissage, dans lequel des alertes ROAAS et des alertes SurfIA sont collectivement appelées alertes, et le circuit de contrôle est en outre configuré pour :
déterminer si de multiples alertes se produisent ; et
lorsque de multiples alertes se produisent, normaliser un schéma de priorité ROASS avec un schéma de priorité SurfIA en une échelle de priorité normalisée, assigner une priorité à chaque alerte des multiples alertes en comparant un classement d'alerte respectif de chaque alerte sur la base de l'échelle de priorité normalisée, filtrer les multiples alertes selon leur priorité assignée conformément à un seuil préprogrammé afin d'identifier une ou plusieurs des multiples alertes à restituer sur l'insert graphique et appliquer un schéma de visualisation qui restitue une ou plusieurs des multiples alertes dans l'environnement de zone d'atterrissage conformément à leur priorité.

2. Système selon la revendication 1, dans lequel l'environnement de zone d'atterrissage fait partie d'un aéroport, l'emplacement d'atterrissage est une piste, et dans lequel le circuit de contrôle est en outre configuré pour faire clignoter un identifiant de piste en réponse à une alerte ROAAS.

3. Système selon la revendication 1, dans lequel le premier schéma de visualisation inclut la restitution d'une bordure dans une première couleur et la restitution d'un remplissage dans une deuxième couleur qui peut être distinguée visuellement de la première couleur, et dans lequel le deuxième schéma de visualisation inclut la restitution de la bordure dans une troisième couleur.

4. Système selon la revendication 1, dans lequel l'environnement de zone d'atterrissage inclut des indications de pistes sécantes et de voies de circulation au niveau de l'emplacement d'atterrissage.

5. Système selon la revendication 1, dans lequel la source de données de trafic est un système de surveillance dépendante automatique en mode diffusion (ADS-B).

6. Système selon la revendication 1, dans lequel la sortie cible sur un emplacement d'atterrissage est identifiée par l'intermédiaire d'une entrée utilisateur reçue à partir d'une interface utilisateur.

7. Procédé pour fournir des informations de zone d'atterrissage sur un affichage avionique sur un dispositif d'affichage dans un cockpit d'un aéronef, le procédé comprenant :
au niveau d'un circuit de contrôle,
la réception (604) de données de l'aéronef porteur ;
l'affichage (606) d'un affichage avionique sur un dispositif d'affichage ;
l'identification (608) d'un emplacement d'atterrissage ;
la construction (610) d'un insert graphique qui illustre un environnement de zone d'atterrissage en tant que zone bidimensionnelle qui inclut l'emplacement d'atterrissage restitué dans celle-ci dans un premier schéma de visualisation ;
la superposition (612) de l'insert graphique sur l'affichage avionique ;
l'indication (614) d'une sortie cible sur l'emplacement d'atterrissage ;
la détermination du fait qu'une alerte de système d'alerte de sensibilisation au dépassement de piste (ROAAS) a été reçue ;
la détermination du fait qu'une alerte d'indication de surface (SurfIA) a été reçue ;
en réponse à l'alerte ROAAS, la modification de la restitution de l'emplacement d'atterrissage et l'affichage d'éléments ROAAS ; et
en réponse à l'alerte SurfIA, l'indication d'un trafic associé à l'alerte SurfIA en utilisant des règles de visualisation SurfIA des alertes ROAAS et des alertes SurfIA étant collectivement appelées alertes, et comprenant en outre, au niveau du circuit de contrôle :
la détermination du fait que de multiples alertes se produisent ; et
lorsque de multiples alertes se produisent, la normalisation d'un schéma de priorité ROAAS avec un schéma de priorité SurfIA en une échelle de priorité normalisée ; l'assignation d'une priorité à chaque alerte des multiples alertes sur la base de l'échelle de priorité normalisée ; la filtration des multiples alertes selon leur priorité assignée conformément à un seuil préprogrammé afin d'identifier une ou plusieurs des multiples alertes à restituer sur l'insert graphique ; et
la restitution d'une ou plusieurs des multiples alertes dans l'environnement de zone d'atterrissage conformément à la priorité assignée.

8. Procédé selon la revendication 7, dans lequel l'environnement de zone d'atterrissage fait partie d'un aéroport, et l'emplacement d'atterrissage est une piste.

9. Procédé selon la revendication 8, comprenant en outre la restitution de la piste avec une bordure rouge et le clignotement d'un identifiant de piste en réponse à l'alerte ROAAS.

10. Procédé selon la revendication 7, comprenant en outre :
la détermination du fait qu'un trafic actuellement hors de l'environnement de zone d'atterrissage arrive sur une piste sécante ; et
l'indication de sa position, de son orientation et d'un niveau de menace dans l'insert graphique en affichant un symbole de trafic SurfIA dans un contour dentelé.

11. Procédé selon la revendication 10, comprenant en outre la réception de données de trafic provenant d'un système de surveillance dépendante automatique en mode diffusion (ADS-B).

12. Procédé selon la revendication 10, comprenant en outre la réception de données de trafic provenant d'un système terrestre de diffusion de trafic.
